# EUROPÄISCHE PATENTANMELDUNG

(11) **EP 4 340 181 A1**
(43) Veröffentlichungstag der Anmeldung: **20.03.2024**
(21) Anmeldenummer: 22195728.5
(22) Anmeldetag: 14.09.2022
(51) Int. Cl.: H02K 1/06, H02K 15/02, H02K 1/28

(54) **VERFAHREN ZUR HERSTELLUNG EINER FESTEN VERBINDUNG ZWISCHEN EINEM BLECHPAKET UND EINEM INNEN HOHLEN BAUTEIL**

(71) Anmelder: voestalpine Automotive Components Dettingen GmbH & Co. KG, 72581 Dettingen an der Erms (DE)
(72) Erfinder: JOOST, Tony, 08066 Zwickau (DE); Lanksweirt, Jochen, 89522 Heidenheim (DE)
(74) Vertreter: Jell, Friedrich

(57) **Zusammenfassung**

Es wird ein Verfahren zur Herstellung einer festen Verbindung zwischen einem Blechpaket (2, 16, 17), das mehrere miteinander fest, insbesondere stoffschlüssig, verbundene Blechteile (4) aufweist, und einem innen hohlen Bauteil (3) gezeigt.

## Beschreibung

Die Erfindung betrifft ein Verfahren zur Herstellung einer festen Verbindung zwischen einem Blechpaket, das mehrere miteinander fest, insbesondere stoffschlüssig, verbundene Blechteile aufweist, und einem innen hohlen Bauteil, bei dem das innen hohle Bauteil in einer Ausnehmung im Blechpaket vorgesehen und in seinem innerhalb des Blechpakets liegenden Längsabschnitt von innen nach außen aufgeweitet wird, um damit die feste Verbindung zwischen Bauteil und Blechpaket herzustellen.

Um eine standfeste Verbindung zwischen einer Hohlwelle und einem Blechpaket aus Blechteilen bzw. Lamellen eines Rotors einer elektrischen Maschine herzustellen, schlägt die DE102018218322A1 vor, die in einer Ausnehmung des Blechpakets eingesetzte Hohlwelle über die gesamte Länge im Blechpaket durch Anwendung von Hochdruck aufzuweiten. Dabei formt sich die Hohlwelle entsprechend der im Querschnitt sternförmig ausgebildeten Ausnehmung. Nachteilig erfahren die einzelnen miteinander verkleben Blechteilen bei der Expansion der Hohlwelle nicht nur radiale, sondern auch axiale Kraftbelastungen, was die Formgenauigkeit der Blechteile gefährdet und die Kurzschlussgefahr zwischen diesen erhöht. Mit einer Verschlechterung der elektromagnetischen Eigenschaft des Blechpakets ist daher zu rechnen.

Des Weiteren kann beim Innenhochdruckumformen austretendes Druckmedium zu einer Kontaminierung des Blechpakets führen - was beispielsweise zu einer unerwünschten Korrosion am Blechpaket führt. Meist sind daher aufwendige Reinigungsmaßnahmen bei derart hergestellten Blechpaketen vorzunehmen.

Es ist daher die Aufgabe der Erfindung, ein aus dem Stand der Technik bekanntes Verfahren zur Herstellung einer festen Verbindung zwischen einem Blechpaket und einem innen hohlen Bauteil derart zu verändern, dass diese mechanische Verbindung möglichst beschädigungsfrei in Bezug auf das Blechpaket herstellbar ist - und dessen elektromagnetischen Eigenschaft möglichst wenig beeinträchtigt werden. Zudem soll durch dieses Verfahren ein geringerer Reinigungsbedarf an dem damit herstellten Blechpaket bestehen.

Die Erfindung löst die gestellte Aufgabe durch die Merkmale des Anspruchs 1.

Indem in das innen hohle Bauteil ein elastisches Deformationselement eingebracht und mit diesem Deformationselement durch Ausüben eines Drucks das innen hohle Bauteil in einem Teilabschnitt des Längsabschnitts von innen nach außen aufgeweitet wird, wobei beim Aufweiten das Deformationselement am innen hohlen Bauteil mit einer Anlagefläche anliegt, die sich im Bereich des Teilabschnitts befindet, kann erfindungsgemäß ein kontrolliertes Aufweiten der Hohlwelle in bestimmten Abschnitten erfolgen. Beispielsweise ist damit ein, eventuell nur an bestimmten Stellen, ungewollter fester Kontakt der Fügepartner vermeidbar - was beispielsweise beim Hochdruckumformen mit vergleichsweise unkontrolliertem Aufweiten eintritt und so zu einer erhöhten Gefahr von axialen Druckkräften auf die Blechteile der Blechpakete führt. Mit den erfindungsgemäßen radialen Druckkräften sind also Brüche an den Klebeverbindungen zwischen den Blechteilen nicht zu befürchten. Daher kann durch Nutzung der Robustheit der Blechteile gegenüber radialen Druckkräften reproduzierbar eine feste Verbindung (formschlüssig und/oder kraftschlüssig) zwischen dem Blechpaket und dem innen hohlen Bauteil mit geringer Beschädigungsgefahr hergestellt werden. Dies lässt beispielsweise auch eine Presspassung zu, die vergleichsweise hohle Drehmomente übertragen kann - was beispielsweise bei einer Wellenverbindung zwischen dem innen hohlen Bauteil und dem Blechpaket gefordert ist.

Zudem kann solch ein Aufweiten des innen hohlen Bauteils mit einem elastischen Deformationselement eine Kontamination des Blechpakets mit einem beim Innenhochdruckverfahren verwendeter Hydraulikflüssigkeit vermieden werden.

Mithilfe des erfindungsgemäßen Verfahrens können daher Blechpakete beschädigungsärmer und frei von Verunreinigungen hergestellt werden.

Die Anlagefläche am innen hohlen Bauteil vollflächig sein, was das hohle Bauteil gleichmäßiger belastet und zu einem verbesserten Umformverhalten führen kann. Es kann auch vorgesehen sein, dass die Anlagefläche das innen hohlen Bauteil innen geschlossen umläuft, was das hohle Bauteil gleichmäßiger belastet und zu einem weiter verbesserten Umformverhalten führen kann.

Beispielsweise übt das Deformationselement auf das innen hohle Bauteil einen Druck ausschließlich in radialer Richtung nach Außen aus, um im Wesentlichen radiale Druckkräfte auf die Blechteile des Blechpakets sicherzustellen. Derart ist die Gefahr von Beschädigungen weiter verringerbar.

Vorzugsweise weist die Anlagefläche zu beiden Enden des Teilabschnitts jeweils einen Abstand auf, welcher Abstand zumindest der Wandstärke des innen hohlen Bauteils im Bereich des jeweiligen Endes des Teilabschnitts entspricht. Dies vermeidet unter anderen die Gefahr eines Auftretens von axialen Druckkräften auf die Blechteile des Blechpakets.

Ein besonders feste, formschlüssige und/oder kraftschlüssige Verbindung kann sich ergeben, wenn nach dem Aufweiten des innen hohlen Bauteils dieses im Teilabschnitt vollflächig an der Ausnehmung anliegt.

Des Weiteren ist vorstellbar, dass die Ausnehmung im Blechpaket zumindest einen Hinterschnitt aufweist, und dass der Teilabschnitt des Längsabschnitts innerhalb der Längserstreckung des Hinterschnitts liegt, um damit die feste Verbindung zwischen Blechpaket und innen hohlem Bauteil mechanisch zu verstärken.

Ist der Hinterschnitt in der Ausnehmung vollständig umlaufend vorgesehen, kann dies die formschlüssige Verbindung weiter verstärken und die Standfestigkeit der festen Verbindung zwischen Blechpaket und innen hohlem Bauteil weiter erhöhen.

Vorzugsweise weist die Ausnehmung mehrere zueinander axial und/oder zueinander in einem Winkel radial versetzt angeordnete Hinterschnitte auf, um die Verdrehsicherheit der festen Verbindung zwischen Blechpaket und innen hohlen Bauteil sicherzustellen.

Weist der Hinterschnitt einen abgerundeten Konturverlauf auf, kann dies beispielsweise singuläre Belastungen am Blechpaket vermeiden und so eine eventuelle Beschädigungsgefahr weiter reduzieren.

Insbesondere kann mit geringer Beschädigungsgefahr das innen hohle Bauteil aufgeweitet werden, wenn eine Aufweitlanze mit dem Deformationselement verwendet wird.

Hohe Reproduzierbarkeit im Verfahren kann sich ergeben, wenn die Aufweitlanze zumindest ein axial bewegliches Druckelement aufweist, das vorzugsweise axial auf das Deformationselement wirkt, um dieses in radiale Richtung nach außen zu verformen

Beispielsweise kann eine Hohlwelle als innen hohles Bauteil bereitgestellt werden, die in einer zentrischen Ausnehmung des Blechpakets vorgesehen wird, um damit etwa einen Rotor für eine elektrische Maschine zu schaffen.

Alternativ ist vorstellbar, einen Verbindungsstift als innen hohles Bauteil bereitzustellen, der in einer, vorzugsweise exzentrischen, Ausnehmung vorgesehen wird.

In diesem Fall kann beispielsweise eine Verbindung zwischen Blechpaketen hergestellt werden, indem der mit dem Blechpaket fest verbundene Verbindungsstift mit einem zweiten Blechpaket fest verbunden wird.

In den Figuren ist beispielsweise der Erfindungsgegenstand anhand mehrerer Ausführungsvarianten näher dargestellt. Es zeigen
- Fig. 1: eine Schnittansicht auf eine Vorrichtung zur Durchführung eines Verfahrens zur Herstellung einer festen Verbindung zwischen einem Blechpaket und einem innen hohlen Bauteil,
- Fig. 1a: eine Detailansicht der Fig. 1,
- Fig. 2: eine Schnittansicht auf den nach Fig. 1 hergestellten Rotor aus einem Blechpaket und einer Hohlwelle als innen hohles Bauteil nach einem ersten Ausführungsbeispiel und
- Fig. 3: eine Explosionszeichnung auf zwei miteinander fest verbundene Blechpakete nach einem zweiten Ausführungsbeispiel, hergestellt mit einer Vorrichtung nach Fig. 1.

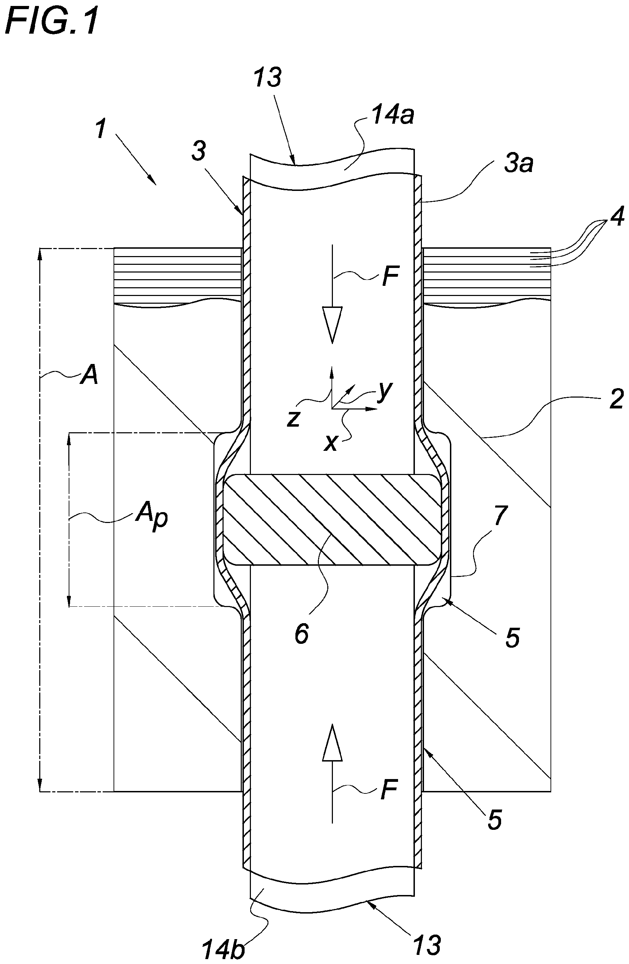

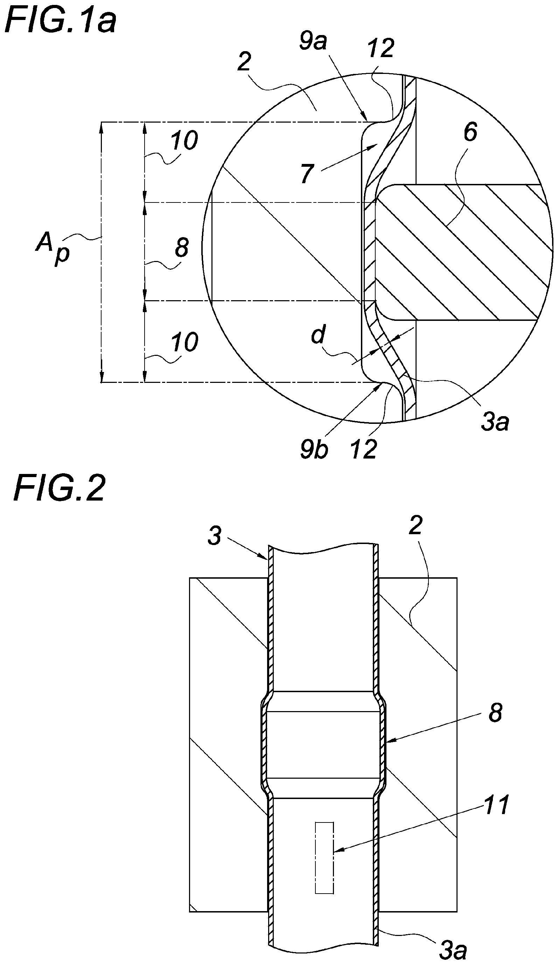

Nach Fig. 1 ist beispielsweise eine Vorrichtung 1 zur Durchführung des erfindungsgemäßen Verfahrens dargestellt. Diese Vorrichtung 1 dient zur Herstellung einer festen Verbindung zwischen einem Blechpaket 2 und einem innen hohlen Bauteil 3. Das Blechpaket 2 weist miteinander stoffschlüssig verbundene Blechteile 4 auf, beispielsweise ausgebildet durch eine zwischen den Blechteilen 4 vorgesehene und gehärtete Klebstoffschicht, beispielsweise eine thermogehärtete Schmelzklebelackschicht, insbesondere Backlack.

Bei dem innen hohlen Bauteil 3 der Figur 1 handelt es sich um eine Hohlwelle 3a, die in eine zentrische Ausnehmung 5 des Blechpakets 2 vorgesehen ist. Die Ausnehmung 5 durchdringt als Aussparung das Blechpaket 2 vollständig.

Die feste mechanische Verbindung zwischen dem innen hohlen Bauteil 3 und dem Blechpaket 2 wird durch ein Aufweiten des innen hohlen Bauteils 3 hergestellt - und zwar wird das innen hohle Bauteil 3 im vom Blechpaket 2 überdecken Längsabschnitt A von innen nach außen aufgeweitet.

Erfindungsgemäß findet dieses Aufweiten lediglich partiell statt, nämlich in einem Teilabschnitt A_{P} im überdeckten Längsabschnitt A - wie in den Figuren 1 zu erkennen. Hierzu wird ein elastisches Deformationselement 6, beispielsweise aus einem Kunststoffwerkstoff, in das innen hohle Bauteil 3 eingebracht und mit diesem auf das innen hohle Bauteil 3 in einem Teilabschnitt Ap des Längsabschnitts A ein Druck D in radialer Richtung nach außen ausgeübt, also radial zur z-Achse in der x-y-Ebene, wie in Fig. 1 dargestellt. Damit wird das innen hohle Bauteil 3 im Längsabschnitt A partiell aufgeweitet.

Auf die Blechteile 4 des Blechpakets 2 wirken daher im Wesentlichen Kräfte in radiale Richtung, was beim Aufweiten Kräfte in axialer Richtung, also in z-Achse, vermeidet und so einen hohen Grad an Beschädigungsfreiheit am Blechpaket 2 garantiert. Die elektromagnetischen Eigenschaften des Blechpakets 2 bleiben daher von der mechanisch festen Verbindung mit der Hohlwelle 3a nahezu unbeeinflusst - was zu einer hohen Reproduzierbarkeit in der Herstellung eines kurzschlussfreien Rotors führt, welcher Rotor in Fig. 2 dargestellt ist.

Wie der Fig. 1 zu entnehmen, weist die Ausnehmung 5 einen Hinterschnitt 7 auf. Hier, nämlich im Teilabschnitt A_{P}, der vom Hinterschnitt 7 überdeckt ist, wird das innen hohle Bauteil 3 vom Deformationselement 6 aufweitet. Und zwar - wie in Fig. 1a zu erkennen - weist das Deformationselement 6 am innen hohlen Bauteil 3 eine Anlagefläche 8 auf, die zu den Enden 9a, 9b des Teilabschnitts A_{P} einen Abstand 10 aufweist. Dieser Abstand 10 entspricht zumindest der Wandstärke d des innen hohlen Bauteils 3 in diesem Bereich. Dies verringert unter anderem auch die Gefahr von axialen Kräften auf die Blechteile 4 des Blechpakets 2.

Der Hinterschnitt 7 ist zudem umlaufend in der Ausnehmung 5 vorgesehen - was eine standfeste mechanische Verbindung zwischen Blechpaket 2 und Bauteil 3 schafft. Zur gleichmäßigen Aufweitung für diese umlaufende Ausnehmung liegt auch das Deformationselement 6 mit der Anlagefläche 8 am innen hohlen Bauteil 3 umlaufend an.

Zudem weist die Ausnehmung 5 zwei axiale und im Winkel α zueinander versetzt angeordnete Hinterschnitte 7, 11 auf, um die Verdrehsicherheit zwischen Blechpaket 2 und Bauteil 3 zu erhöhen.

Beide Hinterschnitte 7, 11 weisen zudem eine abgerundete Außenkontur 12 auf, sodass beim Aufweiten das innen hohle Bauteil 3 über die Außenkontur 12 gleiten kann. Damit wird die Klebeverbindung zwischen den Blechteilen 4 weiter entastet.

Dies umso mehr, wenn beim Aufweiten des innen hohlen Bauteils 3 dieses in die Ausnehmung 5 gedrückt wird, und zwar ausschließlich in radialer Richtung.

Das Aufweisen findet, wie in Fig.1 dargestellt, mit einer Aufweitlanze 13 statt, welche das Deformationselement 6 umfasst. Die Aufweitlanze 13 weist zwei axial bewegliche Druckelemente 14a, 14b auf, die axial mit einer Kraft F auf das elastische Deformationselement 6 wirkt. Dadurch verformt sich das elastische Deformationselement 6 in radialer Richtung nach außen.

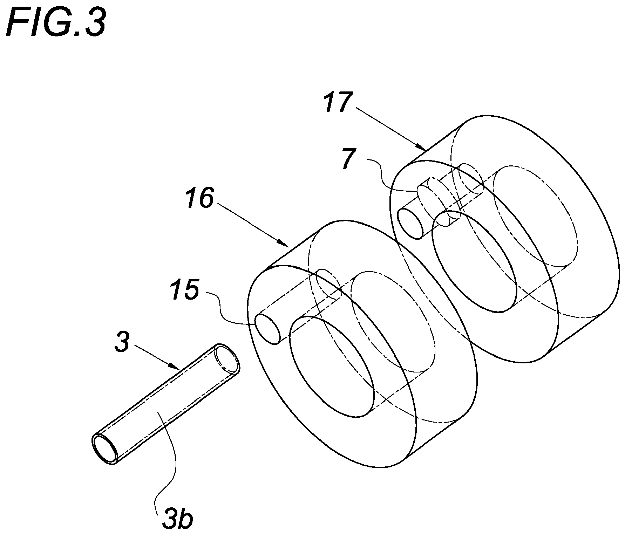

Nach Fig. 3 wird nach einem zweiten Ausführungsbeispiel eine feste mechanische Verbindung zwischen zwei Blechpaketen 16, 17 dargestellt, was mithilfe des erfindungsgemäßen Verfahrens, wie zu den Figuren 1 und 1a zum ersten Ausführungsbeispiel gezeigt, hergestellt ist.

Hierbei wird ein Verbindungsstift 3b als innen hohle Bauteile 3 bereitgestellt, die je in eine exzentrischen Ausnehmung 15 an den beiden Blechpaketen 16, 17 vorgesehen werden. Diese exzentrischen Ausnehmungen 15 werden beispielsweise von durchgehenden Aussparung in den Blechpaket 16, 17 ausgebildet.

Durch das erfindungsgemäße Aufweiten der Verbindungsstifte 5b mithilfe der in Fig. 1 dargestellten Aufweitlanze 13 werden die beiden Blechpakte 16, 17 miteinander fest verbunden.

## Patentansprüche

1. Verfahren zur Herstellung einer festen Verbindung zwischen einem Blechpaket (2, 16, 17), das mehrere miteinander fest, insbesondere stoffschlüssig, verbundene Blechteile (4) aufweist, und einem innen hohlen Bauteil (3), bei dem
das innen hohle Bauteil (3) in einer Ausnehmung (5, 15) im Blechpaket (2, 16, 17) vorgesehen und
in seinem innerhalb des Blechpakets (2, 16, 17) liegenden Längsabschnitt (A) von innen nach außen aufgeweitet wird, um damit die feste Verbindung zwischen Bauteil (3) und Blechpaket (2, 16, 17) herzustellen,
**dadurch gekennzeichnet, dass**
in das innen hohle Bauteil (3) ein elastisches Deformationselement (6) eingebracht und mit diesem Deformationselement (6) durch Ausüben eines Drucks (D) das innen hohle Bauteil (3) in einem Teilabschnitt (A_{P}) des Längsabschnitts (A) von innen nach außen aufgeweitet wird, wobei beim Aufweiten das Deformationselement (6) am innen hohlen Bauteil (3) mit einer Anlagefläche (8) anliegt, die sich im Bereich des Teilabschnitts (A_{P}) befindet.

2. Verfahren nach Anspruch 1, **dadurch gekennzeichnet, dass** die Anlagefläche (8) am innen hohlen Bauteil (3) vollflächig, insbesondere dieses innen geschlossen umlaufend, anliegt.

3. Verfahren nach einem der Ansprüche 1 bis 2, **dadurch gekennzeichnet, dass** das Deformationselement (6) auf das innen hohle Bauteil (3) einen Druck (D) ausschließlich in radialer Richtung nach außen ausübt.

4. Verfahren nach einem der Ansprüche 1 bis 3, **dadurch gekennzeichnet, dass** die Anlagefläche (8) zu beiden Enden (9a, 9b) des Teilabschnitts (A_{P}) jeweils einen Abstand (10) aufweist, welcher Abstand (10) zumindest der Wandstärke (d) des innen hohlen Bauteils (3) im Bereich des jeweiligen Endes (9a, 9b) des Teilabschnitts (A_{P}) entspricht.

5. Verfahren nach einem der Ansprüche 1 bis 4, **dadurch gekennzeichnet, dass** nach dem Aufweiten des innen hohlen Bauteils (3) dieses im Teilabschnitt (A_{P}) vollflächig an der Ausnehmung (5, 15) anliegt.

6. Verfahren nach einem der Ansprüche 1 bis 5, **dadurch gekennzeichnet, dass** die Ausnehmung (5, 15) im Blechpaket (2, 16, 17) zumindest einen Hinterschnitt (7, 11) aufweist, und dass der Teilabschnitt (AP) des Längsabschnitts (A) innerhalb der Längserstreckung des Hinterschnitts (7, 11) liegt.

7. Verfahren nach Anspruch 6, **dadurch gekennzeichnet, dass** der Hinterschnitt (7) in der Ausnehmung (5, 15) vollständig umlaufend vorgesehen ist.

8. Verfahren nach einem der Ansprüche 6 bis 7, **dadurch gekennzeichnet, dass** die Ausnehmung (5) mehrere zueinander axial versetzt und/oder zueinander in einem Winkel radial versetzt angeordnete Hinterschnitte (7, 11) aufweist.

9. Verfahren nach einem der Ansprüche 6 bis 8, **dadurch gekennzeichnet, dass** der Hinterschnitt (7, 11) einen abgerundeten Konturverlauf aufweist.

10. Verfahren nach einem der Ansprüche 1 bis 9, **dadurch gekennzeichnet, dass** eine Aufweitlanze (13) mit dem Deformationselement (6) verwendet wird.

11. Verfahren nach Anspruch 10, **dadurch gekennzeichnet, dass** die Aufweitlanze (13) zumindest ein axial bewegliches Druckelement (14a, 14b) aufweist, das vorzugsweise axial auf das Deformationselement (6) wirkt, um dieses in radiale Richtung nach außen zu verformen.

12. Verfahren nach einem der Ansprüche 1 bis 11, **dadurch gekennzeichnet, dass** eine Hohlwelle (3a) als innen hohles Bauteil (3) bereitgestellt wird, die in einer zentrischen Ausnehmung (5) des Blechpakets (2) vorgesehen wird.

13. Verfahren nach einem der Ansprüche 1 bis 11, **dadurch gekennzeichnet, dass** ein Verbindungsstift (3b) als innen hohles Bauteil (3) bereitgestellt wird, der in einer, vorzugsweise exzentrischen, Ausnehmung (15) vorgesehen wird.

14. Verfahren nach Anspruch 13, **dadurch gekennzeichnet, dass** der mit dem Blechpaket (16) fest verbundene Verbindungsstift (5b) mit einem zweiten Blechpaket (17) fest verbunden wird.
